# FASCICULE DE BREVET EUROPEEN

(11) **EP 3 596 275 B1**
(45) Date de publication et mention de la délivrance du brevet: **06.01.2021**
(21) Numéro de dépôt: 18718585.5
(22) Date de dépôt: 15.03.2018
(51) Int. Cl.: E03B 7/07, E03B 7/12

(54) **HOUSSE DE PROTECTION CONTRE LE GEL D'UN COMPTEUR D'EAU ET PROCÉDÉ DE PROTECTION ASSOCIÉ**
FROSTSCHUTZABDECKUNG FÜR EINEN WASSERZÄHLER UND ENTSPRECHENDES SCHUTZVERFAHREN
FROST PROTECTION COVER FOR A WATER METER AND CORRESPONDING METHOD OF PROTECTION

(30) Priorité: 16.03.2017 FR 1770260
(43) Date de publication de la demande: 22.01.2020
(73) Titulaire: Protecto, 13100 Aix-en-Provence (FR)
(72) Inventeur: AMARA, Mourad, 13200 Arles (FR)
(74) Mandataire: Chevalier, Renaud Philippe
(86) Numéro de dépôt international: PCT/FR2018/050630
(87) Numéro de publication internationale: WO 2018/167438

(56) Documents cités:
- FR-A1- 2 678 042
- KR-A- 20130 092 764
- KR-A- 20150 061 188
- KR-A- 20160 047 224
- KR-U- 20170 000 767
- US-A- 4 112 967

## Description

### [Domaine technique]

La présente invention se rapporte à un dispositif pour protéger et isoler contre le gel un compteur d'eau, ainsi qu'à un procédé de protection pour protéger et isoler contre le gel un compteur d'eau.

Elle se rapporte plus particulièrement à une housse de protection contre le gel d'un compteur d'eau, et à un procédé de protection contre le gel d'un compteur d'eau utilisant une telle housse.

L'invention trouve ainsi son application dans la protection et l'isolation thermique des compteurs d'eau.

### [Etat de la technique antérieure]

De manière connue, il incombe à l'usager, locataire ou propriétaire, de protéger son compteur d'eau du gel. En cas de détérioration due au gel, le coût de son remplacement reste à la charge du consommateur.

Toutes réparations ou généralement remplacements de compteur d'eau dont la détérioration serait due surtout au gel, sont effectuées par les services des eaux aux frais de l'abonné auquel il lui incombe le soin d'entreprendre les précautions nécessaires afin d'éviter les problèmes cités ci-dessus.

La majorité des compteurs d'eau actuels ont une forme arrondie avec :
- une partie haute qui est la plus fragile au regard du gel, car cette partie haute intègre le mécanisme de comptage avec des pièces mobiles généralement en plastique pour éviter l'oxydation, et un cadran sur le sommet pour visualiser les données de comptage ;
- une partie basse de laquelle partent, sur deux côtés opposés dits côté droit et côté gauche, des conduits d'entrée et de sortie munies d'extrémités filetées pour connecter respectivement la canalisation d'entrée d'eau et la canalisation de sortie d'eau.

La protection et l'isolation contre le gel des compteurs d'eau sont traditionnellement effectuées par différents procédés d'isolation et de protection qui consistent à placer autour du compteur d'eau différents matériaux isolants tels que des plaques de polystyrène, des sacs en plastique, des torchons, des bandes de laine de verre.

Or, ces matériaux isolants ne garantissent pas un résultat complètement satisfaisant contre le gel et en outre ces matières ne sont pas du tout adaptées pour ce contexte car ils peuvent notamment être en matières polluantes, retenir l'humidité, attirer les rongeurs et les termites, être propices aux moisissures et/ou avoir un impact nocif sur l'environnement. Par ailleurs, l'accessibilité au compteur d'eau et à son cadran nécessite le retrait complet et souvent difficile de ces différents matériaux isolants.

Il est donc important à ce jour d'apporter une solution de protection contre le gel des compteurs d'eau qui soit à la fois pratique et efficace thermiquement.

Il a ainsi été proposé par le document KR 2013 0092764 une première solution de protection qui se présente sous la forme d'un corps matelassé qui se présente à plat et qui peut être disposé autour d'un compteur d'eau et autour des tubes d'entrée et de sortie, et qui est muni de rubans auto-agrippant pour maintenir le corps matelassé serré autour du compteur d'eau et des conduits d'entrée et de sortie.

Ce corps matelassé comprend :
- une bande inférieure prévue pour entourer à la fois une partie basse du compteur et les tubes d'entrée et de sortie, où cette bande inférieure est munie d'un orifice pour le passage de la partie haute du compteur ;
- une bande supérieure prévue pour entourer la partie haute du compteur, où une languette est prévue sur un bord pour venir couvrir le dessus du compteur, et où la bande supérieure est reliée à la bande inférieure par une patte de jonction.

Ce corps matelassé est réalisé d'un seul tenant par assemblage et découpage de deux membranes, par la réalisation de lignes de jonction intérieures pour former des boudins parallèles, par l'insertion d'un matériau d'isolation thermique entre les deux membranes et par la réalisation de lignes de jonction périphériques pour fermer le corps matelassé.

En situation, le compteur d'eau a, d'une part, sa partie haute (la partie la plus fragile) entourée par la bande supérieure et, d'autre part, sa partie basse (partie d'où partent les conduits d'entrée et de sortie) entourée par la bande inférieure. Ainsi, ce corps matelassé de nombreuses faiblesses thermiques :
- une première faiblesse thermique autour de la partie haute du compteur d'eau, résultant du jeu périphérique entre la bande supérieure et la bande inférieure, une fois ces deux bandes refermées sur elles-mêmes, ce jeu périphérique étant définit par les deux fentes de part et d'autre de la patte de jonction, ce qui contribue à laisser un jour autour de la partie haute du compteur ;
- une deuxième faiblesse thermique autour de la partie haute du compteur d'eau, au niveau des rubans auto-agrippant qui maintiennent la bande supérieure fermée sur elle-même ;
- une troisième faiblesse thermique au niveau des lignes de jonction intérieures, entre les boudins, car le long de ces lignes de jonction intérieures les deux membranes sont directement jointes l'une sur l'autre sans interposition de matériau d'isolation thermique ; et
- une quatrième faiblesse thermique au niveau des rubans auto-agrippant de la bande inférieure, car cette bande inférieure entoure à la fois la partie basse du compteur et les conduits d'entrée et de sortie, or cette partie basse du compteur est plus large que les conduits de sorte qu'il est impossible de plaquer correctement les rubans auto-agrippant sans avoir des plis et des jeux propres à laisser passer le froid.

Une seconde solution est connue du document KR 2017 0000767 et elle consiste en une housse pourvue de trois parties indépendantes qui sont assemblées sur le compteur au moyen de rubans auto-agrippant et qui comprennent une demi-coque arrière prévue pour entourer une moitié arrière du compteur d'eau et des conduits d'entrée et de sortie, une demi-coque avant prévue pour entourer une moitié avant du compteur d'eau et des conduits d'entrée et de sortie, et un couvercle prévue pour chapeauter le compteur et muni de rubans auto-agrippant permettant de fermer le couvercle sur les deux demi-coques.

En situation, cette housse présente plusieurs faiblesses thermiques :
- une première faiblesse thermique autour du compteur d'eau résultant du jeu entre les deux demi-coques ;
- une deuxième faiblesse thermique autour des conduits d'entrée et de sortie résultant également du jeu entre les deux demi-coques.

En outre, cette housse est limitée dans son usage car elle est adaptée et conformée pour un type spécifique de compteur d'eau, sans compter qu'elle est peu pratique à installer du fait d'être réalisée en trois parties indépendantes.

Une troisième solution est connue du document KR 2016 0047224 et elle consiste en une housse monobloc en trois parties, à savoir une demi-coque arrière prévue pour entourer une moitié arrière du compteur d'eau et des conduits d'entrée et de sortie, une demi-coque avant prévue pour entourer une moitié avant du compteur d'eau et des conduits d'entrée et de sortie, et un couvercle prévue pour chapeauter le compteur.

En situation, cette housse présente plusieurs faiblesses thermiques :
- une première faiblesse thermique autour du compteur d'eau résultant du jeu entre les deux demi-coques ;
- une deuxième faiblesse thermique autour des conduits d'entrée et de sortie résultant également du jeu entre les deux demi-coques.

En outre, cette housse est limitée dans son usage car elle est adaptée et conformée pour un type spécifique de compteur d'eau.

### [Exposé de l'invention]

La présente invention a pour but de résoudre en tout ou partie les inconvénients précités, en proposant une housse de protection contre le gel d'un compteur d'eau, qui soit adaptée pour épouser et isoler efficacement la forme des compteurs d'eau (généralement en forme arrondie) afin de les protéger, les isoler thermiquement et ainsi les préserver des chocs mais surtout du gel.

Un autre but de l'invention est d'offrir une protection et un isolement thermiques particulièrement améliorée pour la partie haute du compteur d'eau, qui est la partie la plus fragile avec son cadran et son mécanisme de comptage, qui permette avantageusement une protection homogène et efficace contre le gel.

Un autre but de l'invention est de permettre de contrôler le cadran du compteur d'eau sans agir sur la protection et l'isolation du compteur d'eau.

Un autre but de l'invention est d'avoir une housse qui assure une isolation complète et une protection du compteur d'eau jusqu'aux extrémités filetées des conduits d'entrée et de sortie respectifs du compteur.

A cet effet, elle propose une housse de protection contre le gel d'un compteur d'eau, cette housse comprenant quatre parties confectionnées chacune à partir d'un complexe textile thermique et cousues entre elles pour présenter une forme générale de « T » à l'envers, avec :
- une partie centrale en forme de manchon tubulaire fermé présentant une ouverture supérieure et une ouverture inférieure, où l'ouverture inférieure présente des échancrures à droite et à gauche ;
- deux parties inférieures formant, de chaque côté de la partie centrale à droite et à gauche, des prolongements pour les échancrures respectives, où ces parties inférieures sont en forme de tubes ouverts pouvant être refermés sur eux-mêmes, et où ces parties inférieures sont cousues sur la partie centrale ; et
- une partie supérieure montée sur la partie centrale et faisant office de couvercle pouvant être ouvert ou refermé sur l'ouverture supérieure de la partie centrale.

Ainsi, une telle housse est prévue pour que l'utilisateur enfile ou glisse la partie centrale de la housse autour du compteur, comme une chaussette, de préférence par le haut, afin que cette partie centrale forme un manchon fermé qui entoure et épouse le compteur d'eau.

Cet enfilage de la partie centrale de la housse sera effectué jusqu'à ce que les conduits d'entrée et de sortie du compteur d'eau se placent dans les échancrures respectives, et ainsi ces conduits d'entrée et de sortie sailleront de la partie centrale. A la suite de quoi les deux parties inférieures seront refermées sur elles-mêmes autour des conduits d'entrée et de sortie, et la partie supérieure sera refermée sur l'ouverture supérieure.

Il est à noter que, au sens de l'invention, la notion de « manchon tubulaire fermé » pour la partie centrale est à opposer à la notion de « tube ouvert » pour les parties inférieures, dans le sens où :
- la partie centrale est fermée sur sa hauteur (et il ne peut pas être ouvert sauf à le découper ou à l'endommager) pour être de forme tubulaire apte à être enfilé ou glissé autour du compteur comme une chaussette et à entourer la forme arrondie du compteur d'eau ; et
- les parties inférieures sont ouvertes sur leurs longueurs afin de pouvoir être placées autour des conduits d'entrée et de sortie une fois l'enfilage de la partie centrale réalisée, et ensuite pouvoir envelopper ces conduits d'entrée et de sortie d'eau en étant refermées sur elles-mêmes.

Il est ainsi bien clair, au sens de l'invention, que la partie centrale ne peut pas être une bande plate munie sur sa hauteur de moyens de fixation temporaire tels que des rubans auto-agrippant (donc de moyens présentant des faiblesses thermiques) et qui serait placée autour du compteur, à la manière d'une veste, pour être refermée de manière temporaire.

Au sens de l'invention, la partie centrale est un manchon fermé sur sa hauteur qui est enfilé autour du compteur, à la manière d'une chaussette et pas à la manière d'une veste. Autrement dit, la partie centrale est fermée définitivement sur sa hauteur, de son ouverture inférieure jusqu'à son ouverture supérieure.

Cette conformation de la partie centrale améliore grandement l'isolation thermique du compteur d'eau, et en particulier de sa partie haute qui est la plus fragile, car la fermeture définitive et préalable de la partie centrale permet d'améliorer et d'homogénéiser l'isolation du compteur d'eau sur tout le pourtour de sa partie haute.

Il est à noter aussi que la partie supérieure forme un couvercle qui s'ouvre par le haut de la housse, permettant ainsi l'accès aux différentes informations du cadran du compteur d'eau sans avoir à retirer entièrement la housse.

Par ailleurs, l'emploi d'un complexe textile thermique, qui peut être le même et être différent pour les quatre parties de la housse, participe de l'isolation thermique accrue obtenue grâce à une telle housse.

Un complexe textile thermique, parfois appelé complexage de tissus thermiques, est bien connu du domaine textile et il consiste classiquement en une superposition de plusieurs couches textiles minces employée généralement pour la fabrication de vêtements de protection thermique, et notamment de doublures isolantes.

Un complexe textile thermique forme ainsi une pièce textile souple et multicouches, propre à épouser la forme du compteur d'eau et de ses conduits d'entrée et de sortie, et il comprend au moins plusieurs couches de textiles thermiques, que ce soit des textiles tissés ou non tissés.

Il est à noter que les compositions des matériaux utilisés pour la confection de cette housse répondent efficacement sur le plan thermique et du respect environnemental.

Ainsi, grâce à sa conformation géométrique et au choix de ses matériaux et de son assemblage, la housse selon l'invention est d'une grande facilité d'installation, et ne demande aucun effort physique.

De plus, sa forme permet d'épouser de manière ajustée la forme du compteur d'eau, ce qui rend l'isolation optimale que ce soit de la partie haute du compteur d'eau mais aussi de sa partie basse avec ses conduits d'entrée et de sortie.

De plus, le coût de confection d'une telle housse est faible et donc une industrialisation en série est facilement envisageable, de sorte également que les particuliers ainsi que les collectivités peuvent profiter d'une housse financièrement abordable et surtout efficace.

Ainsi, selon une caractéristique, le complexe textile thermique comprend une superposition de plusieurs couches textiles isolantes.

Selon une autre caractéristique, le complexe textile thermique comprend une superposition d'au moins quatre couches textiles isolantes, et notamment entre quatre et neuf couches textiles isolantes.

Selon une variante, le complexe textile thermique comprend au moins une superposition des couches textiles isolantes suivantes :
- une couche mince de polyéthylène téréphtalate armé (ou PET armé) ;
- une couche mince de ouate ;
- une couche mince de mousse ; et
- une couche mince de polypropylène (tel que du BOPP pour «Biaxially Oriented Coextruded Polypropylene») ;

Selon une variante, le complexe textile thermique comprend au moins une superposition des couches textiles isolantes suivantes :
- une couche mince de polyéthylène téréphtalate armé ;
- une couche mince de ouate ; et
- une couche mince de mousse ;
- une couche mince de polypropylène (tel que du BOPP) ;
- une couche mince de mousse ;
- une couche mince de polypropylène (tel que du BOPP) ;
- une couche mince de ouate ; et
- une couche mince de mousse ;
- une couche mince de polyéthylène téréphtalate armé.

Dans une réalisation particulière, le complexe textile thermique comprend une toile d'imperméabilisation recouvrant la superposition de plusieurs couches textiles isolantes, procurant ainsi une fonction d'imperméabilisation contre les ruissellements d'eau.

Selon une possibilité, la toile d'imperméabilisation est une toile non tissée enduit PVC.

Dans un mode de réalisation particulier, la partie supérieure est munie d'un ruban auto-agrippant associé à un ruban auto-agrippant complémentaire prévu sur la partie centrale pour maintenir fermée la partie supérieure sur l'ouverture supérieure.

Ainsi, la partie supérieure, avantageusement cousue d'une manière renforcé sur le haut de la partie centrale, est ouvrable et refermable facilement et rapidement par un ruban auto-agrippant
Avantageusement, la partie centrale présente des rubans auto-agrippant permettant de fermer l'ouverture inférieure.

Ainsi, le bas de la partie centrale de la housse dépasse sur le dessous de la partie basse du compteur d'eau, et peut être refermé sous le compteur d'eau (et plus spécifiquement sous la partie basse du compteur d'eau) au moyen de ces rubans auto-agrippant.

Autrement dit, la partie du bas de la partie centrale de la housse vient se refermer sur elle-même à l'aide de ces rubans auto-agrippant et vient épouser parfaitement le bas en forme de tube du compteur d'eau d'où une isolation et une protection optimale.

Selon une possibilité de l'invention, les parties inférieures présentent des rubans auto-agrippant pour maintenir les parties inférieures refermées sur elles-mêmes.

Ainsi, ces parties inférieures viennent se refermer sur elles-mêmes à l'aide de ces rubans auto-agrippant afin d'isoler et protéger les conduits d'entrée et de sortie du compteur d'eau.

Selon une autre possibilité de l'invention, les parties inférieures sont cousues à l'extérieur sur les côtés de la partie centrale, afin de réduire les déperditions thermiques au niveau de ces coutures.

Conformément à une autre caractéristique avantageuse de l'invention, la partie centrale est fermée sur sa hauteur de son ouverture inférieure jusqu'à son ouverture supérieure par couture.

Dans une réalisation particulière, la partie centrale est fermée par au moins une couture intérieure le long de deux rabats tournés vers l'intérieur.

Selon une variante, la partie centrale est fermée par au moins une couture extérieure le long de deux rabats tournés vers l'extérieur.

Selon une autre variante, la partie centrale est fermée par au moins une couture le long de deux rabats qui se chevauchent dans l'épaisseur.

Avantageusement, la partie supérieure est munie d'un bord rabattu périphérique propre à recouvrir sur l'extérieur la partie centrale.

L'emploi d'un tel bord rabattu est particulièrement avantageux pour isoler du froid qui suit un mouvement descendant.

L'invention se rapporte également à un procédé de protection pour protéger et isoler contre le gel un compteur d'eau, où ce compteur d'eau présente une partie haute intégrant un mécanisme de comptage et un cadran au sommet, et une partie basse de laquelle partent, sur deux côtés opposés, des conduits d'entrée et de sortie munies d'extrémités filetées, ce procédé de protection étant remarquable en ce qu'il consiste à utiliser une housse selon l'invention en :
- glissant la partie centrale autour du compteur d'eau jusqu'à ce que les conduits d'entrée et de sortie du compteur d'eau se placent dans les échancrures respectives de la partie centrale ;
- refermant les deux parties inférieures autour des conduits d'entrée et de sortie respectives du compteur d'eau ;
- refermant la partie supérieure sur l'ouverture supérieure de la partie centrale et sur le cadran du compteur d'eau.

Un tel procédé de protection peut avantageusement mettre en œuvre l'une au moins des étapes suivantes, prises seules ou en combinaison :
- les deux parties inférieures sont refermées sur elles-mêmes et autour des conduits d'entrée et de sortie respectives au moyen de rubans auto-agrippant ;
- la partie supérieure est refermée sur l'ouverture supérieure de la partie centrale au moyen de rubans auto-agrippant ;
- l'ouverture inférieure de la partie centrale est refermée au moyen de rubans auto-agrippant sous la partie basse du compteur d'eau ;
- les deux parties inférieures recouvrent respectivement les conduits d'entrée et de sortie jusqu'à leurs extrémités filetées respectives.

### [Brève description des dessins]

D'autres caractéristiques et avantages de la présente invention apparaîtront à la lecture de la description détaillée ci-après, d'un exemple de mise en œuvre non limitatif, faite en référence aux figures annexées dans lesquelles :
- la figure 1 est une vue schématique en perspective d'une housse conforme à l'invention ;
- la figure 2 est une vue schématique de face de la housse de la figure 1 en place sur un compteur d'eau ;

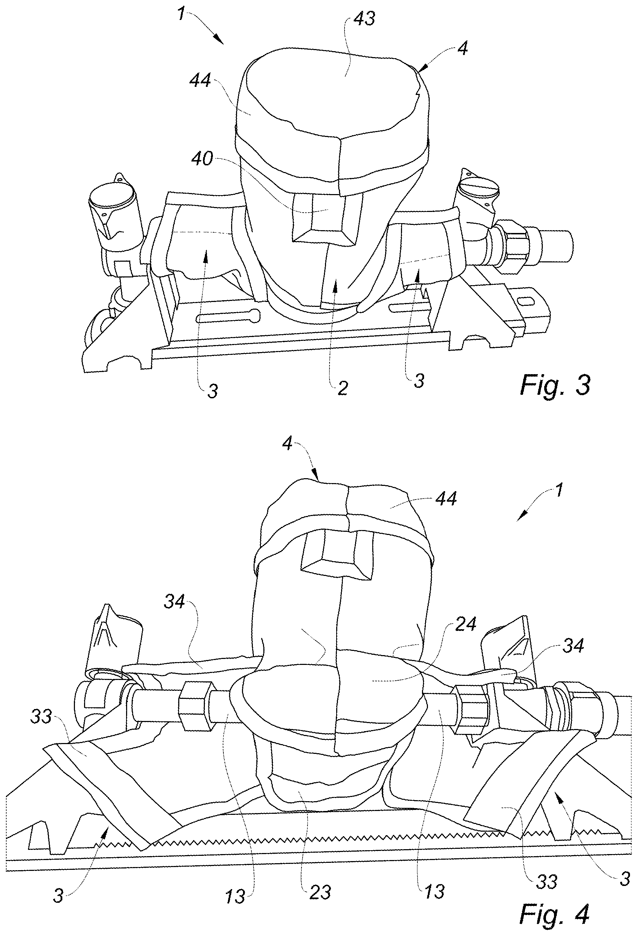

- la figure 3 est une vue schématique de dos de la housse de la figure 1 en place sur un compteur d'eau ;
- la figure 4 est une vue schématique en biais de dessous et de dos de la housse de la figure 1 en place sur un compteur d'eau, avec le bas de sa partie centrale qui est ouvert et avec ses parties inférieures ouvertes ;
- la figure 5 est une vue schématique en biais de dessous et de dos de la housse de la figure 1 en place sur un compteur d'eau, avec le bas de sa partie centrale qui est fermée et avec ses parties inférieures ouvertes ;
- la figure 6 est une vue schématique de dessus de la housse de la figure 1 en place sur un compteur d'eau, avec la partie supérieure formant couvercle qui est ouverte ;

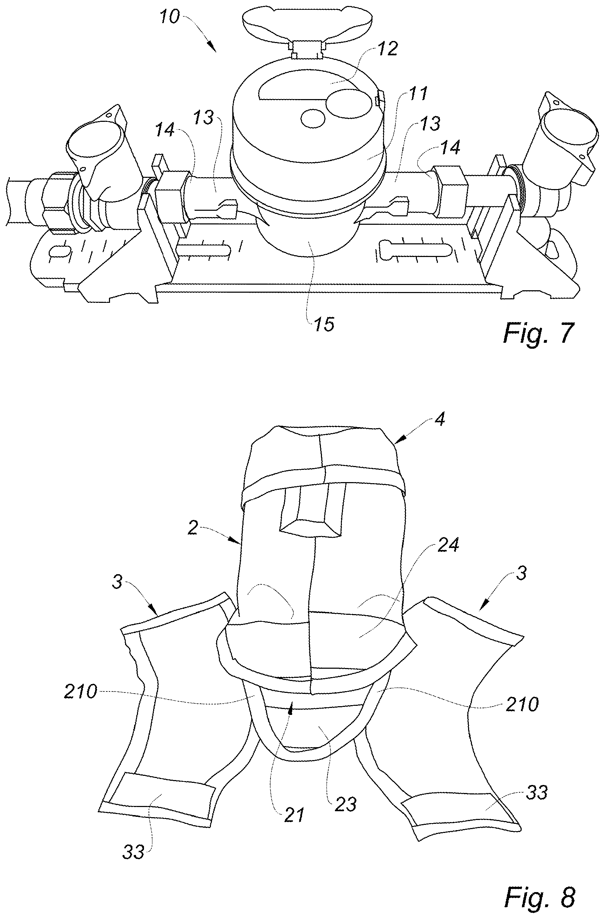

- la figure 7 est une vue schématique en perspective du compteur d'eau des figures 2 à 6, sans la housse ;
- la figure 8 est une vue schématique en biais de dessous et de dos de la housse de la figure 1, avec le bas de sa partie centrale qui est ouvert et avec ses parties inférieures ouvertes ;

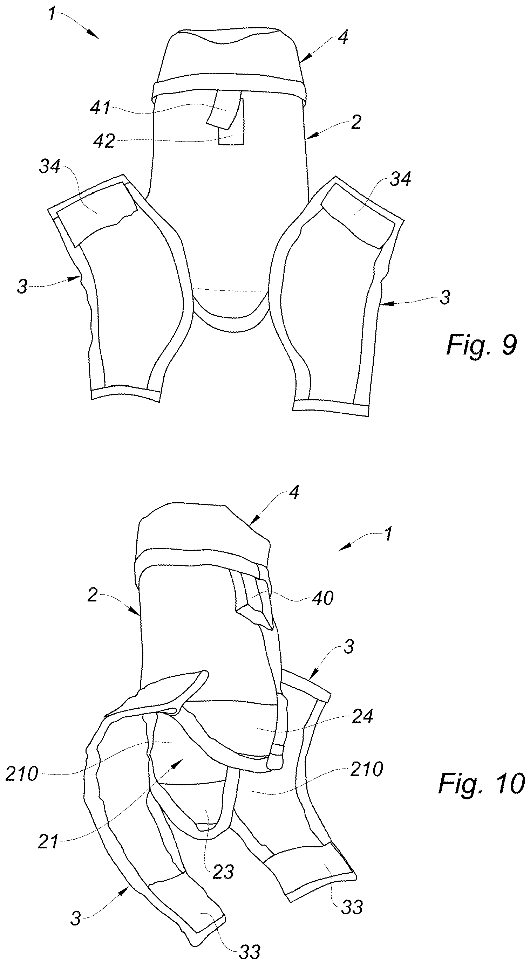

- la figure 9 est une vue schématique de face de la housse de la figure 1, avec le bas de sa partie centrale qui est ouvert et avec ses parties inférieures ouvertes ; et
- la figure 10 est une vue schématique en biais de côté et de dos de la housse de la figure 1, avec le bas de sa partie centrale qui est ouvert et avec ses parties inférieures ouvertes.

### [Exposé détaillé des modes de réalisation]

En référence aux figures, une housse 1 selon l'invention constitue une housse de protection contre le gel d'un compteur d'eau 10.

Un tel compteur d'eau 10 comporte :
- une partie haute 11 intégrant un mécanisme de comptage interne (non visible) et un cadran 12 au sommet, et
- une partie basse 15 de laquelle partent, sur deux côtés opposés, des conduits d'entrée et de sortie 13 munies d'extrémités filetées 14 pour connecter par vissage respectivement une canalisation d'entrée d'eau et une canalisation de sortie d'eau.

La housse 1 comprend quatre parties confectionnées chacune à partir d'un complexe textile thermique et cousues entre elles pour présenter une forme générale de « T » à l'envers.

Le complexe textile thermique comprend une superposition d'au moins quatre couches textiles isolantes, et notamment entre quatre et neuf couches textiles isolantes, recouvertes d'une toile d'imperméabilisation telle que par exemple une toile non tissée enduit PVC.

Ainsi, le complexe textile thermique forme la doublure intérieure de chaque partie de la housse 1 afin de procurer protection et isolation thermique, et la toile d'imperméabilisation forme la membrane extérieure afin de procurer une imperméabilisation.

Plus précisément, la housse 1 comprend :
- une partie centrale 2 en forme de manchon tubulaire fermé présentant une ouverture supérieure 20 (sur le haut de la partie centrale 2) et une ouverture inférieure 21 (sur le bas de la partie centrale 2), où l'ouverture inférieure 21 présente des échancrures 210 à droite et à gauche ;
- deux parties inférieures 3 formant, de chaque côté de la partie centrale 2 à droite et à gauche, des prolongements pour les échancrures 210 respectives, où ces parties inférieures 3 sont en forme de tubes ouverts pouvant être refermés sur eux-mêmes, et où ces parties inférieures 3 sont cousues sur la partie centrale 2 ; et
- une partie supérieure 4 montée sur le haut la partie centrale 2 et faisant office de couvercle pouvant être ouvert ou refermé sur l'ouverture supérieure 20 de la partie centrale 2.

La partie supérieure 4 est rattachée à la partie centrale 2 au moyen d'une languette 40 cousue à la fois sur la partie supérieure 4 et sur la partie centrale 3 ; une telle languette souple autorisant l'ouverture/fermeture de la partie supérieure 4.

La partie supérieure 4 est munie d'un ruban auto-agrippant 41 associé à un ruban auto-agrippant 42 complémentaire prévu sur la partie centrale 2 pour maintenir fermée la partie supérieure 4 sur l'ouverture supérieure 20.

La partie supérieure 4 est munie d'un disque 43 bordé par un bord rabattu périphérique 44 propre à recouvrir sur l'extérieur la partie centrale 2 lorsque cette partie supérieure 4 est refermée. Ce bord rabattu périphérique 44 venant en recouvrement du haut de la partie centrale 2, ce bord rabattu périphérique 44 peut être formé uniquement de la toile d'imperméabilisation. Par contre, le disque 43 est bien formé du complexe textile thermique.

En situation, la partie supérieure 4 recouvre le dessus du compteur d'eau 10, autrement dit recouvre sa partie haute 11 et son cadran 12.

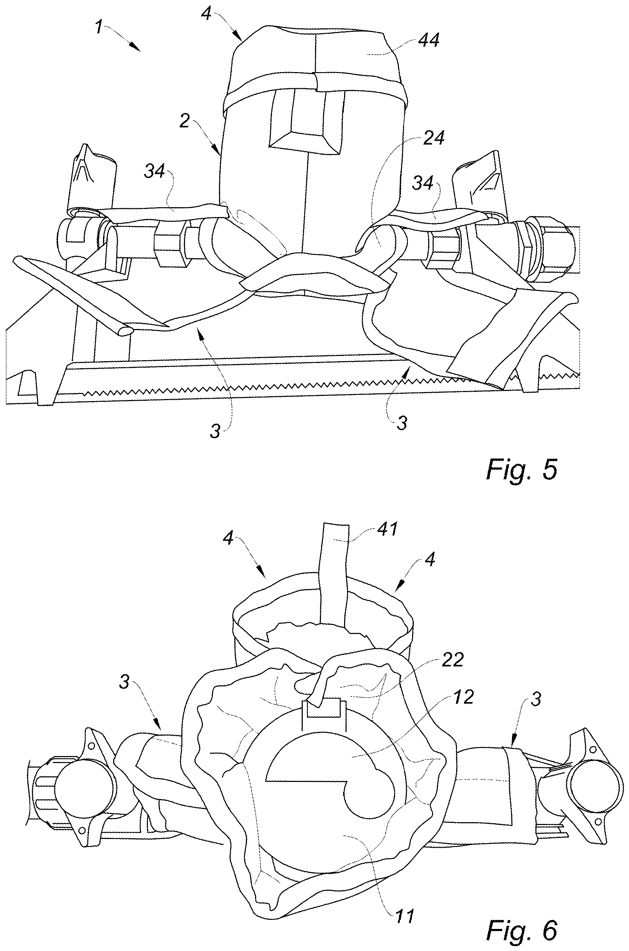

La partie centrale 2 est fermée sur toute sa hauteur, de son ouverture inférieure 21 jusqu'à son ouverture supérieure 20, par couture. Comme visible sur la figure 6, la partie centrale 2 est fermée par au moins une couture intérieure 22 le long de deux rabats tournés vers l'intérieur.

La partie centrale 2 présente sur le bas des rubans auto-agrippant 23, 24 complémentaires, de part et d'autres des échancrures 210, permettant de fermer l'ouverture inférieure 21, avec plus précisément un ruban auto-agrippant intérieur 23 prévu sur une face intérieure de la partie centrale 2, et un ruban auto-agrippant extérieur 24 prévu sur une face extérieure de la partie centrale 2 pour une fermeture par recouvrement de cette face intérieure sur la face extérieure.

Les parties inférieures 3 sont cousues à l'extérieur sur les côtés de la partie centrale 2, le long des échancrures 210.

Ces parties inférieures 3 présentent des rubans auto-agrippant 33, 34 complémentaires pour maintenir les parties inférieures 3 refermées sur elles-mêmes, avec plus précisément pour chaque partie inférieure 3 un ruban auto-agrippant intérieur 33 prévu sur une face intérieure de la partie inférieure 3, et un ruban auto-agrippant extérieur 34 prévu sur une face extérieure de la partie inférieure 3 pour une fermeture par recouvrement de cette face intérieure sur la face extérieure.

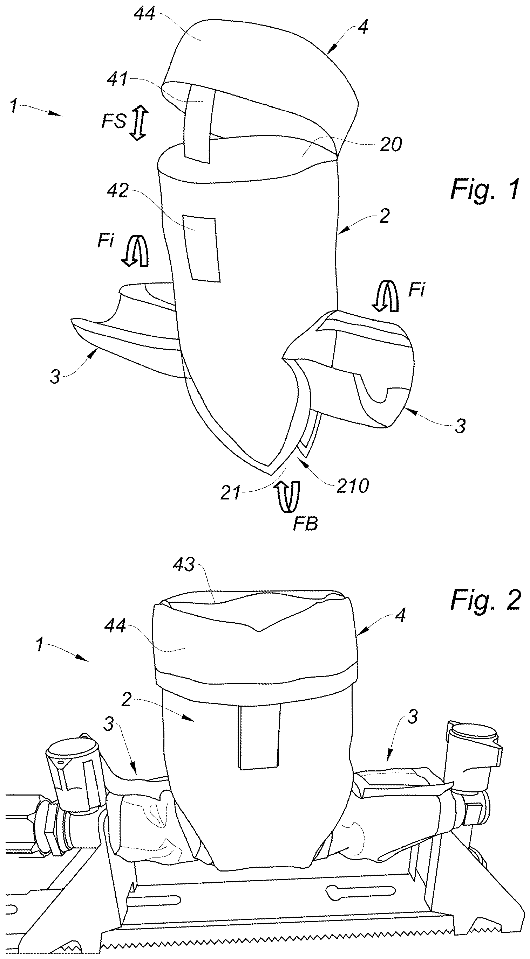

Le procédé de protection pour protéger et isoler contre le gel le compteur d'eau 10 au moyen d'une telle housse 1 met en œuvre les étapes suivantes :
- glisser (ou enfiler) la partie centrale 2 autour du compteur d'eau 10 jusqu'à ce que les conduits d'entrée et de sortie 13 du compteur d'eau 10 se placent dans les échancrures 210 respectives de la partie centrale 2 ;
- refermer les deux parties inférieures 3 autour des conduits d'entrée et de sortie 13 respectives du compteur d'eau 10 au moyen des rubans auto-agrippant 33, 34, où ces parties inférieures 3 recouvrent ainsi respectivement les conduits d'entrée et de sortie 13 jusqu'à leurs extrémités filetées 14 respectives (comme schématisé par les flèches FI sur la figure 1) ;
- refermer la partie supérieure 4 sur l'ouverture supérieure 20 de la partie centrale 2 et sur le cadran 12 du compteur d'eau 10 au moyen des rubans auto-agrippant 41, 42 (comme schématisé par les flèches FS sur la figure 1) ;
- refermer l'ouverture inférieure 21 de la partie centrale 2 (autrement dit refermer le bas de cette partie centrale 2) au moyen des rubans auto-agrippant 23, 24 sous la partie basse 15 du compteur d'eau 10 (comme schématisé par la flèche FB sur la figure 1).

## Revendications

1. Housse (1) de protection contre le gel d'un compteur d'eau (10), ladite housse (1) comprenant quatre parties (2, 3, 4) confectionnées chacune à partir d'un complexe textile thermique et cousues entre elles pour présenter une forme générale de « T » à l'envers, avec :
- une partie centrale (2) en forme de manchon tubulaire fermé présentant une ouverture supérieure (20) et une ouverture inférieure (21), où l'ouverture inférieure (21) présente des échancrures (210) à droite et à gauche ;
- deux parties inférieures (3) formant, de chaque côté de la partie centrale (2) à droite et à gauche, des prolongements pour les échancrures (210) respectives, où ces parties inférieures (3) sont en forme de tubes ouverts pouvant être refermés sur eux-mêmes, et où ces parties inférieures (3) sont cousues sur la partie centrale (2) ; et
- une partie supérieure (4) montée sur la partie centrale (2) et faisant office de couvercle pouvant être ouvert ou refermé sur l'ouverture supérieure (20) de la partie centrale (2).

2. Housse (1) selon la revendication 1, dans laquelle le complexe textile thermique comprend une superposition de plusieurs couches textiles isolantes.

3. Housse (1) selon la revendication 2, dans laquelle le complexe textile thermique comprend une superposition d'au moins quatre couches textiles isolantes, et notamment entre quatre et neuf couches textiles isolantes.

4. Housse (1) selon l'une quelconque des revendications 2 à 3, dans laquelle le complexe textile thermique comprend une toile d'imperméabilisation, comme par exemple une toile non tissée enduit PVC, recouvrant la superposition de plusieurs couches textiles isolantes.

5. Housse (1) selon l'une quelconque des revendications précédentes, dans laquelle la partie supérieure (4) est munie d'un ruban auto-agrippant (41) associé à un ruban auto-agrippant (42) complémentaire prévu sur la partie centrale (2) pour maintenir fermée la partie supérieure (4) sur l'ouverture supérieure (20).

6. Housse (1) selon l'une quelconque des revendications précédentes, dans laquelle la partie centrale (2) présente des rubans auto-agrippant (23, 24) permettant de fermer l'ouverture inférieure (21).

7. Housse (1) selon l'une quelconque des revendications précédentes, dans laquelle les parties inférieures (3) présentent des rubans auto-agrippant (33, 34) pour maintenir les parties inférieures (3) refermées sur elles-mêmes.

8. Housse (1) selon l'une quelconque des revendications précédentes, dans laquelle les parties inférieures (3) sont cousues à l'extérieur sur les côtés de la partie centrale (2) le long des échancrures (210).

9. Housse (1) selon l'une quelconque des revendications précédentes, dans laquelle la partie centrale (2) est fermée sur sa hauteur de son ouverture inférieure (21) jusqu'à son ouverture supérieure (20) par couture.

10. Housse (1) selon la revendication 9, dans laquelle la partie centrale (2) est fermée par au moins une couture intérieure (22) le long de deux rabats tournés vers l'intérieur.

11. Housse (1) selon l'une quelconque des revendications précédentes, dans laquelle la partie supérieure (4) est munie d'un bord rabattu périphérique (44) propre à recouvrir sur l'extérieur la partie centrale (2).

12. Procédé de protection pour protéger et isoler contre le gel un compteur d'eau (10), où ledit compteur d'eau (10) présente une partie haute (11) intégrant un mécanisme de comptage et un cadran (12) au sommet, et une partie basse (15) de laquelle partent, sur deux côtés opposés, des conduits d'entrée et de sortie (13) munies d'extrémités filetées (14), ledit procédé de protection étant **caractérisé en ce qu'**il consiste à utiliser une housse (1) selon l'une quelconque des revendications précédentes en :
- glissant la partie centrale (2) autour du compteur d'eau (10) jusqu'à ce que les conduits d'entrée et de sortie (13) du compteur d'eau (10) se placent dans les échancrures (210) respectives de la partie centrale (2) ;
- refermant les deux parties inférieures (3) autour des conduits d'entrée et de sortie (13) respectives du compteur d'eau (10) ;
- refermant la partie supérieure (4) sur l'ouverture supérieure (20) de la partie centrale (2) et sur le cadran (12) du compteur d'eau (10).

13. Procédé de protection selon la revendication 12, dans lequel les deux parties inférieures (3) sont refermées sur elles-mêmes et autour des conduits d'entrée et de sortie (13) respectives du compteur d'eau (10) au moyen de rubans auto-agrippant (33, 34).

14. Procédé selon l'une quelconque des revendications 12 et 13, dans lequel la partie supérieure (4) est refermée sur l'ouverture supérieure (20) de la partie centrale (2) au moyen de rubans auto-agrippant (41, 42).

15. Procédé selon l'une quelconque des revendications 12 à 14, dans lequel l'ouverture inférieure (21) de la partie centrale (2) est refermée au moyen de rubans auto-agrippant (23, 24) sous la partie basse (15) du compteur d'eau (10).

## Patentansprüche

1. Frostschutzabdeckung (1) für einen Wasserzähler (10), wobei die Abdeckung (1) vier Teile (2, 3, 4) umfasst, die jeweils aus einem Wärmetextilkomplex angefertigt und miteinander vernäht sind, um eine allgemeine Form eines verkehrten "T" aufzuweisen, mit:
- einem mittleren Teil (2) in Form einer geschlossenen, röhrenförmigen Hülse, die eine obere Öffnung (20) und eine untere Öffnung (21) aufweist, wobei die untere Öffnung (21) Einschnitte (210) rechts und links aufweist;
- zwei unteren Teilen (3), die auf jeder Seite des mittleren Teils (2) rechts und links Verlängerungen für die jeweiligen Einschnitte (210) bilden, wobei diese unteren Teile (3) die Form offener Röhren aufweisen, die in sich geschlossen werden können, und wobei diese unteren Teile (3) am mittleren Teil (2) vernäht sind; und
- einem oberen Teil (4), der am mittleren Teil (2) befestigt ist und als Deckel fungiert, der auf der oberen Öffnung (20) des mittleren Teils (2) offen oder geschlossen sein kann.

2. Abdeckung (1) nach Anspruch 1, wobei der Wärmetextilkomplex eine Überlagerung von mehreren isolierenden Textilschichten umfasst.

3. Abdeckung (1) nach Anspruch 2, wobei der Wärmetextilkomplex eine Überlagerung von mindestens vier isolierenden Textilschichten umfasst und insbesondere zwischen vier und neun isolierenden Textilschichten.

4. Abdeckung (1) nach einem der Ansprüche 2 bis 3, wobei der Wärmetextilkomplex ein Abdichtungstuch umfasst, wie zum Beispiel ein PVCbeschichtetes Vliestuch, das die Überlagerung von mehreren isolierenden Textilschichten bedeckt.

5. Abdeckung (1) nach einem der vorstehenden Ansprüche, wobei der obere Teil (4) mit einem Klettband (41) ausgestattet ist, das einem komplementären Klettband (42) zugehörig ist, das auf dem mittleren Teil (2) vorgesehen ist, um den oberen Teil (4) auf der oberen Öffnung (20) geschlossen zu halten.

6. Abdeckung (1) nach einem der vorstehenden Ansprüche, wobei der mittlere Teil (2) Klettbänder (23, 24) aufweist, die das Schließen der unteren Öffnung (21) ermöglichen.

7. Abdeckung (1) nach einem der vorstehenden Ansprüche, wobei die unteren Teile (3) Klettbänder (33, 34) aufweisen, um die unteren Teile (3) in sich geschlossen zu halten.

8. Abdeckung (1) nach einem der vorstehenden Ansprüche, wobei die unteren Teile (3) außen auf den Seiten des mittleren Teils (2) entlang der Einschnitte (210) vernäht sind.

9. Abdeckung (1) nach einem der vorstehenden Ansprüche, wobei der mittlere Teil (2) über seine Höhe von seiner unteren Öffnung (21) bis zu seiner oberen Öffnung (20) durch eine Naht geschlossen ist.

10. Abdeckung (1) nach Anspruch 9, wobei der mittlere Teil (2) durch mindestens eine Innennaht (22) entlang von zwei Laschen, die nach innen gewandt sind, geschlossen wird.

11. Abdeckung (1) nach einem der vorstehenden Ansprüche, wobei der obere Teil (4) mit einem umgeschlagenen Umfangsrand (44) ausgestattet ist, der imstande ist, den mittleren Teil (2) außen zu bedecken.

12. Schutzverfahren zum Schützen und Isolieren eines Wasserzählers (10) vor Frost, wobei der Wasserzähler (10) einen oberen Teil (11) aufweist, in dem ein Zählmechanismus und ein Zifferblatt (12) an der Spitze eingebaut sind, und einen unteren Teil (15), von dem auf zwei gegenüberliegenden Seiten Zulauf- und Ablaufleitungen (13) ausgehen, die mit Gewindeenden (14) ausgestattet sind, wobei das Schutzverfahren **dadurch gekennzeichnet ist, dass** es darin besteht, eine Abdeckung (1) nach einem der vorstehenden Ansprüche zu verwenden, indem:
- der mittlere Teil (2) um den Wasserzähler (10) geführt wird, bis sich die Zulauf- und Ablaufleitungen (13) des Wasserzählers (10) in die jeweiligen Einschnitte (210) des mittleren Teils (2) einfügen;
- die zwei unteren Teile (3) um die jeweiligen Zulauf- und Ablaufleitungen (13) des Wasserzählers (10) geschlossen werden;
- der obere Teil (4) über der oberen Öffnung (20) des mittleren Teils (2) und über dem Zifferblatt (12) des Wasserzählers (10) geschlossen wird.

13. Schutzverfahren nach Anspruch 12, wobei die zwei unteren Teile (3) in sich und um die jeweiligen Zulauf- und Ablaufleitungen (13) des Wasserzählers (10) herum mithilfe von Klettbändern (33, 34) geschlossen werden.

14. Verfahren nach einem der Ansprüche 12 und 13, wobei der obere Teil (4) über der oberen Öffnung (20) des mittleren Teils (2) mithilfe von Klettbändern (41, 42) geschlossen wird.

15. Verfahren nach einem der Ansprüche 12 bis 14, wobei die untere Öffnung (21) des mittleren Teils (2) mithilfe von Klettbändern (23, 24) unter dem unteren Teil (15) des Wasserzählers (10) geschlossen wird.

## Claims

1. A cover (1) for protecting against frost a water meter (10), said cover (1) comprising four portions (2, 3, 4) each tailored from a thermal textile complex and sewed together to present an upside down «T» like general shape, with:
- a central portion (2) closed tubular sleeve-shaped having an upper opening (20) and a lower opening (21), wherein the lower opening (21) has indentations (210) on the right and on the left;
- two lower portions (3) forming, on each side of the central portion (2) on the right and on the left, extensions for the respective indentations (210), wherein these lower portions (3) are shaped as open tubes which can be closed on themselves, and wherein these lower portions (3) are sewed on the central portion (2); and
- an upper portion (4) mounted on the central portion (2) and serving as a lid that can be opened or closed on the upper opening (20) of the central portion (2).

2. The cover (1) according to claim 1, wherein the thermal textile complex comprises a superposition of several insulating textile layers.

3. The cover (1) according to claim 2, wherein the thermal textile complex comprises a superposition of at least four insulating textile layers, and in particular between four and nine insulating textile layers.

4. The cover (1) according to any one of claims 2 to 3, wherein the thermal textile complex comprises a waterproofing fabric, such as for example a PVC coated nonwoven fabric, covering the superposition of several insulating textile layers.

5. The cover (1) according to any one of the preceding claims, wherein the upper portion (4) is provided with a self-gripping tape (41) associated with a complementary self-gripping tape (42) provided on the central portion (2) to keep the upper portion (4) closed on the upper opening (20).

6. The cover (1) according to any one of the preceding claims, wherein the central portion (2) is provided with self-gripping tapes (23, 24) allowing closing the lower opening (21).

7. The cover (1) according to any one of the preceding claims, wherein the lower portions (3) are provided with self-gripping tapes (33, 34) for keeping the lower portions (3) closed on themselves.

8. The cover (1) according to any one of the preceding claims, wherein the lower portions (3) are externally sewed on the sides of the central portion (2) along the indentations (210).

9. The cover (1) according to any one of the preceding claims, wherein the central portion (2) is closed over its height from its lower opening (21) to its upper opening (20) by sewing.

10. The cover (1) according to claim 9, wherein the central portion (2) is closed by at least one internal seawing (22) along two flaps facing inwardly.

11. The cover (1) according to any one of the preceding claims, wherein the upper portion (4) is provided with a peripheral folded edge (44) capable of covering the exterior of the central portion (2).

12. A protection method for protecting and insulating against frost a water meter (10), wherein said water meter (10) has a top portion (11) integrating a counting mechanism and a dial (12) at the top, and a bottom portion (15) from which depart, on two opposite sides, inlet and outlet ducts (13) provided with threaded ends (14), said protection method being **characterized in that** it consists in using a cover (1) according to any one of the preceding claims by:
- slipping the central portion (2) around the water meter (10) until the inlet and outlet ducts (13) of the water meter (10) are placed in the respective indentations (210) of the central portion (2);
- closing the two lower portions (3) around the respective inlet and outlet ducts (13) of the water meter (10);
- closing the upper portion (4) on the upper opening (20) of the central portion (2) and on the dial (12) of the water meter (10).

13. The protection method according to claim 12, wherein the two lower portions (3) are closed on themselves and around the respective inlet and outlet ducts (13) of the water meter (10) by means of self-gripping tapes (33, 34).

14. The protection method according to any one of claims 12 and 13, wherein the upper portion (4) is closed on the upper opening (20) of the central portion (2) by means of self-gripping tapes (41, 42).

15. The protection method according to any one of claims 12 to 14, wherein the lower opening (21) of the central portion (2) is closed by means of self-gripping tapes (23, 24) under the bottom portion (15) of the water meter (10).
